# FASCICULE DE BREVET EUROPEEN

(11) **EP 0 553 002 B1**
(45) Date de publication et mention de la délivrance du brevet: **08.05.1996**
(21) Numéro de dépôt: 93400075.3
(22) Date de dépôt: 13.01.1993
(51) Int. Cl.: F04D 29/14, F16J 15/00, F16J 15/16

(54) **Dispositif de sécurité pour pompe primaire**
Schutzvorrichtung für eine Primärpumpe
Protecting device for a primary pump

(30) Priorité: 24.01.1992 FR 9200783
(43) Date de publication de la demande: 28.07.1993
(73) Titulaire: JEUMONT INDUSTRIE - JI, F-92400 Courbevoie (FR)
(72) Inventeur: Monjean, Daniel, F-59460 Jeumont (FR); Mahaut, Richard, F-59600 Maubeuge (FR)
(74) Mandataire: Phélip, Bruno

(56) Documents cités:
- EP-A- 0 148 583
- DE-A- 3 540 369

## Description

La présente invention est relative à un dispositif de sécurité pour une pompe de refroidissement d'un réacteur nucléaire.

Une centrale nucléaire comprend de façon classique un réacteur nucléaire, trois ou quatre générateurs de vapeur et trois ou quatre circuits de refroidissement du réacteur nucléaire dans lesquels circule un fluide primaire de refroidissement. Dans les centrales nucléaires PWR (ou REP: réacteur à eau sous pression), le fluide primaire de refroidissement est de l'eau sous pression de l'ordre de 15,5 MPa. Chaque circuit comprend une branche "chaude" par laquelle le fluide de refroidissement à température élevée circule du réacteur nucléaire vers une première chambre d'expansion de chaque générateur de vapeur. Un échange thermique intervient alors entre le fluide de refroidissement et l'eau dont est alimenté chaque générateur de vapeur.

Chaque circuit comprend de plus une branche "froide" dans lequel le fluide de refroidissement, dont la température a été diminuée par l'échange de chaleur intervenu, circule d'une deuxième chambre d'expansion de chaque générateur de vapeur vers le réacteur nucléaire. Chaque circuit comprend enfin un groupe moto-pompe primaire, implanté sur la branche "froide", qui assure la circulation du fluide de refroidissement.

De façon classique, les groupes moto-pompes primaires ont un axe vertical, le moteur étant disposé au-dessus de la pompe, par l'intermédiaire d'un support. L'aspiration du fluide de refroidissement s'effectue par la partie basse de la pompe et suivant l'axe de celle-ci, son refoulement s'effectuant latéralement, radialement ou tangentiellement.

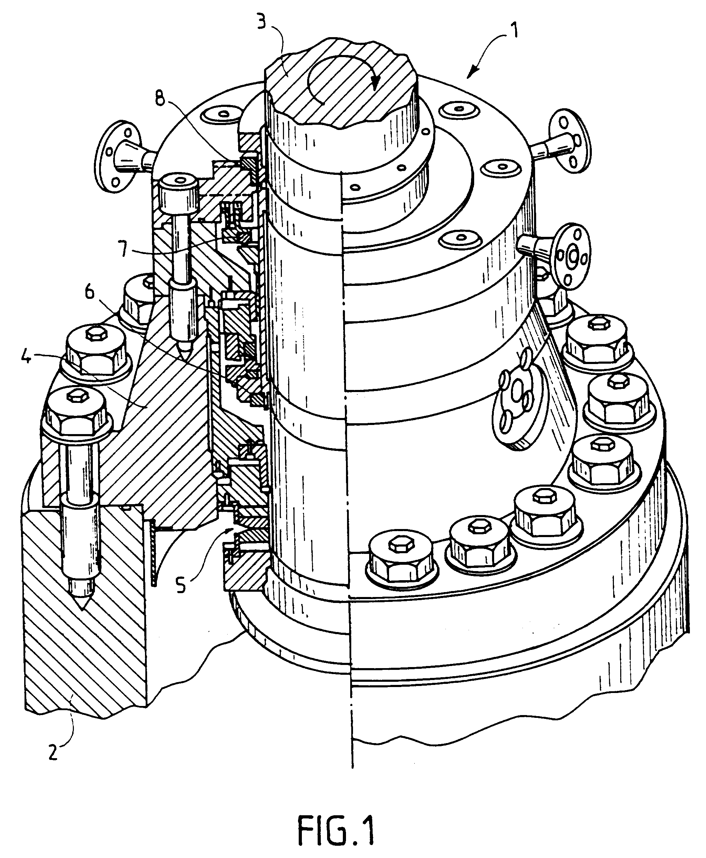

Comme le montre la Figure 1, la pompe 1 comporte de façon générale un logement 2 qui se termine, en partie haute, par un logement 4 pour des joints, l'arbre 3 de la pompe étant monté en rotation dans ce logement 4.

Lorsque le moteur fait tourner l'arbre 3, la roue située à l'intérieur du logement 2 de la pompe, fait circuler le fluide de refroidissement à des pressions allant de la pression atmosphérique à 15,5 MPa et à une température de l'ordre de 280 à 300°C. Ce fluide de refroidissement sous pression exerce une force, dirigée vers le haut, sur l'arbre de la pompe, dans la mesure où la partie supérieure du logement 4 des joints est à la pression atmosphérique.

De façon à ce que l'arbre 3 de la pompe puisse tourner librement dans le logement 4 des joints, tout en maintenant une étanchéité entre l'intérieur du logement 2 de la pompe et l'extérieur du logement des joints, on prévoit en général trois joints 5, 6, 7 disposés autour de l'arbre et l'un au- dessus de l'autre, à l'intérieur du logement 4.

Ce jeu de trois joints successifs assure donc normalement l'étanchéité de l'arbre. Cependant, en cas de défaillance complète ou partielle de ce jeu de joints, les éléments en aval subissent une pression pour laquelle ils n'ont pas été conçus et, après leur rupture, le fluide sous pression contaminé vient déborder et emplir l'enceinte elle-même du bâtiment du réacteur.

C'est pourquoi on prévoit un dispositif de sécurité, tel que le dispositif repéré 8 sur la Figure 1. Ce dispositif est disposé à l'intérieur du logement 4 des joints, dans sa partie supérieure.

Un tel dispositif de sécurité est communément appelé un dispositif d'étanchéité à l'arrêt car il est activé après avoir procédé à un arrêt de la pompe primaire.

Le brevet FR-A-2 474 605 au nom de la Demanderesse, décrit un tel dispositif de sécurité pour pompe primaire.

Ce dispositif comprend un piston cylindrique creux entourant coaxialement l'arbre de la pompe et situé en aval du troisième joint 7. Ce piston est normalement situé dans un logement ménagé à cet effet dans le logement des joints. En cas de rupture, on procède en premier lieu à l'arrêt de la pompe puis on active les moyens permettant de déplacer le piston. Celui-ci vient alors comprimer un joint contre l'arbre et le fluide ne peut alors inonder l'enceinte du réacteur.

On a cependant constaté que ce dispositif de sécurité comportait des inconvénients.

Il est tout d'abord apparu qu'en cas de rupture d'au moins deux joints, la pression en amont du piston creux devenait relativement importante et qu'en conséquence, le piston venait se plaquer contre l'arbre avant même que l'on ait procédé au ralentissement puis à l'arrêt de la pompe et activé les moyens permettant de déplacer axialement ce piston. Or, comme cela a été indiqué plus haut, ce dispositif de sécurité est destiné à fonctionner uniquement lorsque la pompe est à l'arrêt pour éviter toute détérioration. Ainsi, en pratique, il est apparu nécessaire de disposer deux tiges, perpendiculairement à l'arbre, de façon à pouvoir maintenir le piston en position basse. Ces tiges ne sont libérées que lorsque les moyens permettant de déplacer axialement le piston sont activés.

On comprend aisément que la présence de ces deux tiges rend le dispositif de sécurité complexe tant lors de sa fabrication que lors de son fonctionnement.

Les moyens préférés pour déplacer le piston étant constitués par une source auxiliaire de fluide sous pression, par exemple de l'air comprimé, on a pu également constater que cette pression devait être relativement importante, jusqu'à 5 MPa.

C'est pourquoi il est apparu nécessaire de mettre au point un nouveau dispositif de sécurité permettant, dans tous les cas de fonctionnement, de répondre aux conditions suivantes :
- maintien du dispositif de sécurité en position inactive, tant que la pompe est en fonctionnement,
- fermeture assurée lors de l'arrêt de la pompe et
- valeur relativement faible de la pression d'activation.

L'invention est ainsi relative à un dispositif de sécurité assurant l'étanchéité longitudinale de l'arbre d'une pompe primaire en cas de rupture d'au moins deux joints séparant de l'atmosphère la chambre à haute pression du fluide dans ladite pompe, ledit dispositif étant placé en aval de la chambre à basse pression (28), entre cette dernière et l'atmosphère et comprenant un piston creux comportant une partie amont de diamètre extérieur D1 et une partie aval de diamètre extérieur D3, supérieur à D1, ledit piston entourant coaxialement l'arbre et étant placé dans une chambre ménagée dans le logement des joints, ledit dispositif comportant de plus des moyens d'activation permettant de déplacer axialement le piston contre l'arbre en cas de rupture desdits joints, caractérisé en ce qu'en aval du piston sont ménagées deux chambres annulaires, la première, dont le diamètre externe D2 est supérieur au diamètre D1, étant en communication avec la chambre à basse pression.

Selon un mode de réalisation de l'invention, un évidement annulaire, de diamètre D2 est pratiqué dans la partie aval dudit piston, ledit logement des joints comportant un élément annulaire en saillie destiné à coopérer avec ledit évidement pour délimiter avec l'arbre ladite première chambre.

Selon une variante de réalisation de l'invention, ledit élément annulaire est porté par la face amont d'une pièce annulaire rapportée audit logement.

De préférence, on prévoit alors un jeu relativement faible entre le logement des joints ou la pièce annulaire et l'arbre et un jeu relativement important entre le piston creux et l'arbre.

De façon préférée, les moyens d'activation sont constitués par une source auxiliaire de fluide sous pression connectée à un conduit communiquant avec une chambre ménagée autour de la partie aval dudit piston.

Selon un premier mode de réalisation de l'invention, ladite deuxième chambre est en communication avec l'extérieur du logement des joints.

Dans ce cas, des passages sont réalisés dans le logement des joints ou entre la pièce annulaire et le logement des joints.

Dans un mode préféré de réalisation de l'invention, on prévoit des ressorts entre la pièce annulaire et le piston. La présence de ces ressorts permet d'assurer le retour automatique du piston en position basse lorsque les moyens d'activation sont coupés.

Selon une première variante, la deuxième chambre est remplie par un gaz à une pression déterminée.

Selon une deuxième variante, la deuxième chambre est remplie par un liquide.

Selon une troisième variante, la deuxième chambre est reliée à une source de pression d'une valeur déterminée, notamment à ladite source auxiliaire de fluide sous pression.

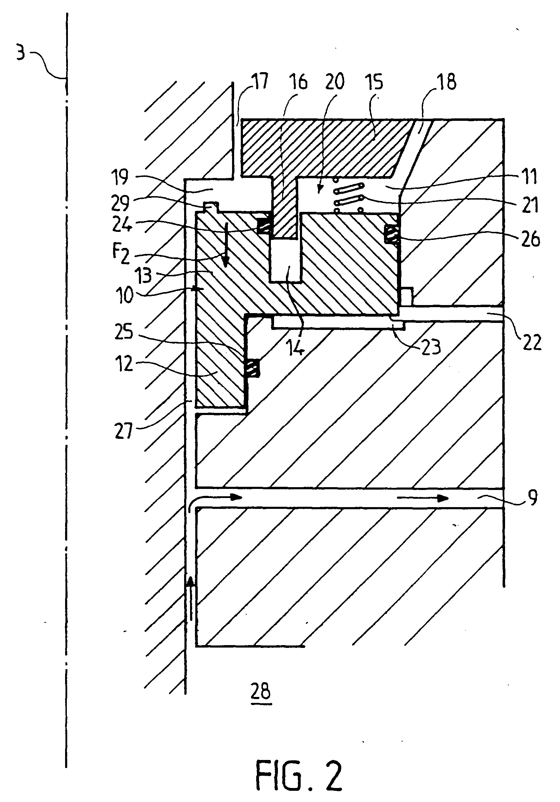

L'invention sera mieux comprise et d'autres buts, avantages et caractéristiques de celle-ci apparaîtront plus clairement à la lecture de la description qui suit d'un mode de réalisation de l'invention, donné à titre non limitatif et illustré par la Figure 2.

Cette Figure 2 représente schématiquement en demi-coupe axiale un dispositif conforme à l'invention.

Les éléments communs avec la Figure 1 seront désignés par les mêmes références.

En référence à la Figure 2, sur laquelle l'axe de symétrie de la pompe est représenté en traits mixtes, on retrouve l'arbre 3 et le logement 4 des joints, l'arbre 3 pouvant tourner à l'intérieur du logement 4. L'ensemble des trois joints, qui n'est pas représenté sur la Figure 2, sépare la chambre à haute pression, non représentée, de la chambre 28 où règne une pression P1 inférieure à celle de la chambre à haute pression. Le fluide de fuite est canalisé le long de l'arbre 3 et est évacué par le conduit 9 communiquant avec la chambre à basse pression 28.

En cas de défaillance des joints 5, 6 ou 7, selon la nature des détériorations survenues, le système de joints d'arbre laisse passer un débit important qui peut aller jusqu'à plusieurs dizaines de mètres cube d'eau par heure. De plus, les pressions régnant à l'intérieur du système de joints d'arbre s'élèvent considérablement, la pression régnant dans la chambre 28 pouvant atteindre 10 MPa.

Comme expliqué précédemment, pour éviter que le fluide sous pression s'échappe du logement des joints, à l'extérieur duquel règne la pression atmosphérique, on prévoit un dispositif de sécurité.

Ce dispositif est essentiellement constitué par un piston creux ou annulaire 10, de diamètre interne D0. Ce piston est placé dans une chambre 11 ménagée dans le logement 4 des joints. Il est constitué d'une partie inférieure ou amont 12 de diamètre extérieur D1 et d'une partie supérieure ou aval 13 de diamètre extérieur D3, supérieur à D1. Dans la partie aval 13 du piston est pratiqué un évidement annulaire 14 dont le diamètre interne D2 est supérieur à D1.

On prévoit également une pièce annulaire 15 qui est placée à l'extrémité supérieure ou aval de la chambre 11 du piston 10. Cette pièce 15 comprend, sur sa face inférieure ou amont un élément annulaire 16 en saillie. Cet élément 16 est destiné à coopérer avec l'évidement 14 pratiqué dans le piston creux 10.

On peut noter que cette pièce annulaire peut être une pièce rapportée qui est fixée sur le logement des joints. Elle peut également faire partie de ce logement.

Le jeu 17 ménagé entre l'arbre 3 et la pièce annulaire 15, est relativement faible et l'élément en saillie 16 permet ainsi de délimiter avec l'arbre 3 une première chambre 19 dans laquelle règne une pression P2 inférieure à la pression P1 de la chambre à basse pression 28. On comprend en effet, que du fait de la présence du jeu radial 27 entre le piston et l'arbre, et du piston creux 10, la pression P2 est inférieure à la pression P1 qui s'exerce sur la face inférieure ou amont de la partie inférieure ou amont 12 du piston.

Le jeu radial 27 est choisi relativement élevé de façon à ce que la perte de charge à ce niveau soit faible, quels que soient les débits obtenus et à ce que la pression P2 reste légèrement inférieure à P1. L'élément en saillie 16 permet de plus de définir une deuxième chambre 20, déterminée par le piston 10 et le logement 4 des joints. Des passages 18 réalisés entre la pièce annulaire et le logement des joints ou dans le logement des joints relient la chambre 20 à l'extérieur du logement des joints et permettent à cette chambre d'être, comme l'extérieur du logement des joints, à la pression atmosphérique.

On note que des ressorts 21 sont disposés dans la deuxième chambre 20, entre la pièce annulaire 15 et le piston creux 10. On comprend que ces ressorts pourraient également être disposés dans la première chambre 19 ou encore dans les deux chambres 19 et 20.

Le dispositif de sécurité comprend enfin des moyens d'activation permettant de déplacer axialement le piston creux 10 de façon à ce que celui-ci vienne s'appliquer contre l'arbre, pour réduire et supprimer l'échappement du fluide dans l'enceinte du réacteur. Les moyens préférés pour déplacer le piston 10 sont constitués par une source auxiliaire de fluide sous pression, par exemple de l'air comprimé sous une pression comprise entre 0,5 et 1 MPa, cette source auxiliaire étant connectée au conduit 22 qui communique avec une chambre annulaire 23 qui est ménagée autour de la partie supérieure ou aval 13 du piston creux 10.

Les joints 24, 25 et 26 qui sont, par exemple, des joints toriques, évitent tout mélange des différents fluides sous pression.

En dehors de toute anomalie de fonctionnement du ou des joints 5 à 7, le débit de fuite éventuel du joint 7 s'échappe par le conduit 9. La pression P1 qui règne dans la chambre à basse pression 28 est donc la pression atmosphérique.

Il n'existe aucun écoulement par l'espace annulaire 27 et la pression P2 dans la première chambre 19 est pratiquement la pression atmosphérique. Le diamètre D2 étant supérieur à D1, le piston est soumis à une force dirigée vers le bas et reste effectivement en position basse.

Lorsqu'une défaillance des joints survient, la pression P1 qui règne dans la chambre à basse pression 28 augmente et le fluide primaire déborde par le jeu radial 27. Survient alors un débordement de fluide primaire à l'extérieur du logement de pompe. On procède alors à une coupure de l'alimentation du moteur électrique entraînant la pompe primaire.

Le jeu radial 27 ayant été choisi relativement grand et le jeu 17, entre la pièce annulaire et l'arbre, relativement petit, la pression P2 qui règne dans la chambre 19 est très faiblement inférieure à P1. En conséquence, la résultante des forces s'exerçant sur le piston creux est dirigée vers le bas et ce dernier reste en position basse.

Après arrêt de la pompe, on active le dispositif de sécurité en connectant la source auxiliaire de fluide sous pression au conduit 22. Ce fluide sous pression pénètre alors dans la chambre 23 et exerce sur le piston creux une force dirigée vers le haut. Le piston 10 se déplace alors axialement et vient se plaquer contre l'arbre 3. L'étanchéité entre le piston creux 10 et l'arbre peut être obtenue par différents moyens, notamment par un contact métal-métal, un nez 29 étant alors usiné en saillie sur le piston 10 ou par un joint torique d'étanchéité à la partie supérieure du piston. Le joint torique n'est pas représenté sur la Figure 2. L'élément en saillie 16 pénètre alors complètement dans l'évidement 14 et les ressorts 21 se trouvent comprimés. Le piston creux 10 permet ainsi d'interdire la fuite du fluide sous pression vers l'extérieur du logement 4 des joints.

Lorsqu'après avoir dépressurisé la chambre haute pression, on souhaite que le piston 10 revienne en position basse, on déconnecte la source auxiliaire de fluide sous pression, le piston revient alors automatiquement en position basse sous l'effet des ressorts 21. Cependant, le retour du piston en position basse pourrait être assuré par un dispositif manuel classique, les ressorts n'étant donc pas obligatoirement prévus.

On comprend que lorsque ces ressorts 21 sont prévus, ils doivent être choisis de façon à ce que les moyens d'activation permettent cependant de soulever le piston lorsqu'ils sont mis en oeuvre.

Ainsi, le dispositif de sécurité est conçu de telle sorte qu'en aval du piston 10 sont ménagées deux chambres annulaires. Dans la première chambre 19, règne une pression P2, légèrement inférieure à la pression P1 régnant dans la chambre à basse pression 28, mais cependant supérieure ou égale à la pression atmosphérique qui, elle, règne dans la deuxième chambre 20. Par un choix approprié du diamètre extérieur D2 de la première chambre, on s'assure que la résultante des forces agissant sur le piston 10 est toujours dirigée vers le bas quelles que soient les conditions de fonctionnement. Ainsi le piston creux reste en position basse tant que les moyens d'activation ne sont pas mis en oeuvre. Il n'est donc pas nécessaire de prévoir des moyens additionnels de blocage dans le dispositif de sécurité.

Dans le mode de réalisation du dispositif de sécurité qui a été décrit la première chambre 19 est créée par la présence de la pièce annulaire 15 avec son élément en saillie 16. C'est donc le diamètre interne de l'évidement annulaire 14 correspondant qu'il convient de choisir de façon appropriée.

On comprend que du fait que la pression P2 ne s'exerce pas sur l'ensemble de la face supérieure ou aval du piston 10, la force F2 correspondante est limitée et ainsi, la valeur de la pression d'activation reste modérée. On peut ainsi, avec des pressions d'activation comprise entre 3 et 7 bars réaliser la fermeture du piston.

Il est nécessaire de limiter la surface sur laquelle s'exerce la pression P2, dans la mesure où celle-ci peut atteindre des valeurs élevées, par exemple 9 MPa, lorsqu'une détérioration des joints survient.

Dans le mode de réalisation décrit, la valeur du diamètre interne de l'évidement 14 doit donc être choisie de façon judicieuse de façon à ce que le piston reste en position basse tant que les moyens d'activation ne sont pas mis en oeuvre, la force exercée sur le piston, dirigée vers le bas, due à la pression régnant dans la chambre 19, devant cependant être limitée pour qu'avec une pression d'activation relativement faible, les moyens d'activation déplacent le piston en position haute.

Lorsque les ressorts 21 sont prévus, le maintien en position basse du piston est encore plus sûr, tant que les moyens d'activation ne sont pas mis en oeuvre.

On peut également envisager des formes de réalisation pouvant se substituer aux ressorts 21.

Ainsi, on peut remplir la deuxième chambre 20 avec un gaz à une pression déterminée, par exemple de 10⁵ Pa, la deuxième chambre étant dans ce cas étanche, aucun passage tel que ceux référencés 18 n'étant prévu.

On peut aussi remplir la chambre 20 avec un liquide, la chambre 20 étant mise en communication avec l'extérieur du logement des joints lorsque le dispositif de sécurité est activé.

On peut enfin connecter la deuxième chambre 20 à une source de pression et notamment la source auxiliaire de fluide sous pression des moyens d'activation. Lorsque le dispositif de sécurité est activé, il convient de déconnecter la source de pression de la deuxième chambre.

Les signes de référence insérés après les caractéristiques techniques énoncées dans les revendications, ont pour seul but de faciliter la compréhension de ces dernières et ne peuvent avoir en aucun cas pour effet de limiter l'invention au mode particulier de réalisation qui vient d'être décrit.

## Revendications

1. Dispositif de sécurité assurant l'étanchéité longitudinale de l'arbre (3) d'une pompe primaire en cas de rupture d'au moins deux joints (5, 6, 7) séparant de l'atmosphère la chambre à haute pression du fluide dans ladite pompe, ledit dispositif étant placé en aval de la chambre à basse pression (28), entre cette dernière et l'atmosphère, et comprenant un piston creux (10) comportant une partie amont (12) de diamètre extérieur D1 et une partie aval de diamètre extérieur D3, supérieur à D1, ledit piston (10) entourant coaxialement ledit arbre et étant placé dans une chambre (11) ménagée dans le logement (4) des joints, ledit dispositif comportant de plus des moyens d'activation permettant de déplacer axialement ledit piston (10) contre ledit arbre (3) en cas de rupture des joints (5, 6, 7), caractérisé en ce qu'en aval du piston (10) sont ménagées deux chambres annulaires, la première (19), dont le diamètre externe D2 est supérieur au diamètre D1, étant en communication avec la chambre à basse pression (28).

2. Dispositif de sécurité selon la revendication 1, caractérisé en ce qu'un évidement (14) annulaire de diamètre interne D2 est pratiqué dans la partie aval (13) dudit piston (10), ledit logement (4) des joints comportant un élément annulaire (16) en saillie, destiné à coopérer avec ledit évidement (14) pour délimiter avec l'arbre ladite première chambre (19).

3. Dispositif de sécurité selon la revendication 2, caractérisé en ce que ledit élément annulaire (14)est porté par la face amont d'une pièce annulaire (15) rapportée audit logement (4).

4. Dispositif de sécurité selon l'une des revendications 2 ou 3, caractérisé en ce qu'un jeu (17) relativement faible est prévu entre l'arbre (3) et le logement (4) des joints ou la pièce annulaire (15), tandis que le jeu radial (27) entre le piston (10) et l'arbre (3) est relativement important.

5. Dispositif de sécurité selon l'une des revendications 1 à 4 , caractérisé en ce que lesdits moyens d'activation sont constitués par une source auxiliaire de fluide sous pression connectée à un conduit (22) communiquant avec une chambre (23) ménagée autour de la partie aval (13) dudit piston (10).

6. Dispositif selon l'une des revendications 1 à 5, caractérisé en ce que ladite deuxième chambre (20) est en communication avec l'extérieur du logement (4) des joints.

7. Dispositif selon la revendication 6, caractérisé en ce que des passages (18) sont réalisés dans le logement (4) des joints ou entre ladite pièce annulaire (15) et ledit logement (4).

8. Dispositif de sécurité selon l'une des revendications 1 à 7, caractérisé en ce que des ressorts (21) sont prévus entre le logement (4) des joints ou ladite pièce annulaire (15) et ledit piston (10).

9. Dispositif selon l'une des revendications 1 à 5, caractérisé en ce que ladite deuxième chambre (20) est remplie par un gaz à une pression déterminée.

10. Dispositif selon l'une des revendications 1 à 5, caractérisé en ce que ladite deuxième chambre (20) est remplie par un liquide.

11. Dispositif selon l'une des revendications 1 à 5, caractérisé en ce que ladite deuxième chambre (20) est reliée à une source de pression d'une valeur déterminée, notamment à ladite source auxiliaire de fluide sous pression.

## Claims

1. Safety device providing longitudinal sealing of the shaft (3) of a primary pump in the event of breakage of at least two seals (5,6,7) separating from the atmosphere the high-pressure chamber for the fluid in the said pump, the said device being placed downstream of the low-pressure chamber (28), between said last and the atmosphere, and comprising a hollow piston (10) including an upstream part (12) of outer diameter D1 and a downstream part of outer diameter D3 greater than D1, the said piston (10) coaxially surrounding the said shaft and being placed in a chamber (11) formed in the housing (4) for the seals, the said device including, in addition, activating means making it possible to move the said piston (10) axially against the said shaft (3) in the event of breakage of the seals (5,6,7), characterized in that downstream of the piston (10) are formed two annular chambers, the first one (19), whose external diameter D2 is greater than the diameter D1, being in communication with the low-pressure chamber (28).

2. Safety device according to Claim 1, characterized in that an annular recess (14) of internal diameter D2 is made in the downstream part (13) of the said piston (10), the said housing (4) for the seals including a projecting annular element (16), intended to interact with the said recess (14) to delimit, with the shaft, the said first chamber (19).

3. Safety device according to Claim 2, characterized in that the said annular element (14) is carried by the upstream face of an annular component (15) attached to the said housing.

4. Safety device according to one of Claims 2 or 3, characterized in that a relatively slight clearance (17) is provided between the shaft (3) and the housing (4) for the seals or the annular component (15) whereas the radial clearance (27) between the piston (10) and the shaft (3) is relatively significant.

5. Safety device according to one of Claims 1 to 4, characterized in that the said activating means consist of an auxiliary source of pressurized fluid connected to a pipe (22) communicating with a chamber (23) formed around the downstream part (13) of the said piston (10).

6. Device according to one of Claims 1 to 5, characterized in that the said second chamber (20) is in communication with the outside of the housing (4) for the seals.

7. Device according to Claim 6, characterized in that passages (18) are produced in the housing (4) for the seals or between the said annular component (15) and the said housing (4).

8. Safety device according to one of Claims 1 to 7, characterized in that springs (21) are provided between the housing (4) for the seals or the said annular component (15) and the said piston (10).

9. Device according to one of Claims 1 to 5, characterized in that the said second chamber (20) is filled by a gas at a given pressure.

10. Device according to one of Claims 1 to 5, characterized in that the said second chamber (20) is filled by a liquid.

11. Device according to one of Claims 1 to 5, characterized in that the said second chamber (20) is connected to a source of pressure of a given value, particularly to the said auxiliary source of pressurized fluide.

## Patentansprüche

1. Sicherheitsvorrichtung, die die Dichtheit in Längsrichtung der Welle (3) einer primären Pumpe im Falle des Bruchs wenigstens zweier Dichtungen (5,6,7), die die Kammer mit hohem Druck des Fluids in der genannten Pumpe von der Atomosphäre trennen, sichert, wobei die genannte Vorrichtung in Bezug auf die Kammer mit niedrigem Druck (28) stromabwärts zwischen letzlerer und der Atmosphäre liegt und einen Hohlkolben (10) umfaßt, der einen stromaufwärtigen Teil (12) mit Außendurchmesser D1 und einen stromabwärtigen Teil mit Außendurchmesser D3 größer als D1 aufweist, wobei der genannte Kolben (10) die genannte Welle koaxial umgibt und in einer in der Aufnahme (4) der Dichtungen ausgesparten Kammer (11) liegt, wobei die Vorrichtung außerdem Aktivierungsmittel aufweist, die es gestatten, im Fall eines Bruchs der Dichtungen (5,6,7) den genannten Kolben (10) gegen die genannte Welle (3) axial zu verschieben, dadurch gekennzeichnet, daß stromabwärts des Kolbens (10) zwei ringförmige Kammern angeordnet sind, wobei die erste (19), deren Außendurchmesser D2 größer als der Durchmesser D1 ist, mit der Kammer mit niedrigem Druck (28) in Verbindung steht.

2. Sicherheitsvorrichtung nach Anspruch 1, dadurch gekennzeichnet, daß im stromabwärtigen Teil (13) des genannten Kolbens (10) eine ringförmige Aussparung (14) mit Innendurchmesser D2 angebracht ist, wobei die Aufnahme (4) der Dichtungen ein vorspringendes ringförmiges Element (16) aufweist, das dazu bestimmt ist, mit der genannten Aussparung (14) zusammenzuwirken, um mit der Welle die genannte erste Kammer (19) abzugrenzen.

3. Sicherheitsvorrichtung nach Anspruch 2, dadurch gekennzeichnet, daß das genannte ringförmige Element (14) von der stromaufwärtigen Seite eines ringförmigen Teils (15) getragen wird, bezogen auf die genannte Aufnahme (4).

4. Sicherheitsvorrichtung nach einem der Ansprüche 2 oder 3, dadurch gekennzeichnet, daß ein relativ geringer Spielraum (17) zwischen der Welle (3) und der Aufnahme (4) der Dichtungen oder dem ringförmigen Teil (15) vorgesehen ist, während der radiale Spielraum (27) zwischen dem Kolben (10) und der Welle (3) relative groß ist.

5. Sicherheitsvorrichtung nach einem der Ansprüche 1 bis 4, dadurch gekennzeichnet, daß die genannten Aktivierungsmittel von einer Hilfsquelle von unter Druck stehendem Fluid gebildet wird, die mit einer Leitung (22) verbunden ist, die mit einer um das stromabwärtige Teil (13) des genannten Kolbens (10) herum angeordneten Kammer (13) in Verbindung steht.

6. Vorrichtung nach einem der Ansprüche 1 bis 5, dadurch gekennzeichnet, daß die genannte zweite Kammer (20) mit dem Äußeren der Aufnahme (4) der Dichtungen in Verbindung steht.

7. Vorrichtung nach Anspruch 6, dadurch gekennzeichnet, daß in der Aufnahme (4) der Dichtungen oder zwischen dem genannten ringförmigen Teil (15) und der genannten Aufnahme (4) Durchgänge (18) gestaltet sind.

8. Sicherheitsvorrichtung nach einem der Ansprüche 1 bis 7, dadurch gekennzeichnet, daß zwischen der Aufnahme der Dichtungen oder dem genannten ringförmigen Teil (15) und dem genannten Kolben (10) Federn (21) vorgesehen sind.

9. Vorrichtung nach einem der Ansprüche 1 bis 5, dadurch gekennzeichnet, daß die gennannte zweite Kammer (20) mit einem Gas mit einem bestimmten Druck gefüllt ist.

10. Vorrichtung nach einem der Ansprüche 1 bis 5, dadurch gekennzeichnet, daß die genannte zweite Kammer (20) mit einer Flüssigkeit gefüllt ist.

11. Vorrichtung nach einem der Ansprüche 1 bis 5, dadurch gekennzeichnet, daß die zweite Kammer (20) mit einer Druckquelle mit einem bestimmten Druckwert verbunden ist, insbesondere mit der genannten Hilfsquelle des unter Druck stehenden Fluids.
